# EUROPÄISCHE PATENTSCHRIFT

(11) **EP 1 241 505 B1**
(45) Veröffentlichungstag und Bekanntmachung des Hinweises auf die Patenterteilung: **07.05.2003**
(21) Anmeldenummer: 02003695.0
(22) Anmeldetag: 19.02.2002
(51) Int. Cl.: G02B 15/177, G02B 7/10

(54) **Vario-Sucher für Weitwinkelaufnahmen**
Zoom viewfinder for wide-angle photos
Viseur zoom pour photos à grand angle

(30) Priorität: 14.03.2001 DE 10112611
(43) Veröffentlichungstag der Anmeldung: 18.09.2002
(73) Patentinhaber: Leica Camera AG, 35606 Solms (DE)
(72) Erfinder: Harand, Bernd, 35579 Wetzlar (DE); Brethauer, Antje, 35578 Wetzlar (DE)
(74) Vertreter: Stamer, Harald

(56) Entgegenhaltungen:
- US-A- 4 948 227
- US-A- 5 182 592
- US-A- 5 262 898
- US-A- 5 335 034

## Beschreibung

Die Erfindung betrifft einen Vario-Sucher für Weitwinkelaufnahmen mit den Merkmalen des Oberbegriffs des Anspruchs 1.

Das optische System für einen solchen Vario-Sucher ist aus US 4 725 130 bekannt und insbesondere für Kompakt-Kameras vorgesehen. Diese Kameras sind häufig mit Zoom-Objektiven ausgestattet, die für einen relativ begrenzten Brennweitenbereich ausgelegt sind. Die Suchervergrößerung wird in Abhängigkeit von der Brennweitenänderung über Kurvensteuerungen getrieblich so verstellt, daß das Bildfeld im Sucher mit dem Bildfeld für die Aufnahme übereinstimmt. Zur Anpassung der Suchervergrößerung werden zwei der Linsengruppen relativ zu einer feststehenden Linsengruppe verstellt. Dabei wird mindestens auch eine der äußeren Linsengruppen verstellt, so daß sich die Baulänge des Suchersystems verändert. Da das Suchersystem in das Kameragehäuse integriert ist, hat das keine besondere Bedeutung.

Kameras mit einem Meßsucher und auswechselbaren Objektiven unterschiedlicher Brennweite sind üblicherweise mit einem Sucher konstanter Vergrößerung ausgestattet, die für eine ausgesuchte Objektiv-Brennweite optimiert ist. Bei Verwendung eines Objektivs mit längerer oder kürzerer Brennweite werden in den Sucher verschiedene Rahmen eingespiegelt, die dem veränderten Aufnahme-Bildfeld entsprechen. Je länger die Brennweite des Objektivs ist, um so kleiner wird das durch den Rahmen begrenzte Bildfeld. Entsprechend wird bei kürzeren Brennweiten der Rahmen immer größer und kann ab einer bestimmten Brennweite im Sucher nicht mehr dargestellt werden. Der Benutzer kann dann das vom Objektiv aufgenommene Bildfeld im Sucher nicht mehr vollständig beobachten.

Um diesem Mißstand abzuhelfen, werden für Weitwinkelobjektive spezielle Sucher vorgesehen, deren Bildfeld an das des Objektivs angepaßt ist und die über einen Adapter in den Blitzschuh an der Kamera eingeschoben werden können. Solche als Galilei-Sucher bekannten Systeme stellen in ihrem Grundaufbau ein umgekehrtes holländisches Fernrohr dar. Sie weisen objektseitig eine Zerstreuungslinse auf. Diese Linse begrenzt gleichzeitig das Sehfeld und hat daher häufig eine dem Aufnahmeformat ähnliche Form oder es wird eine dem Aufnahmeformat entsprechende Maske hinzugefügt. Eine Sammellinse wirkt als Okular. Das Sehfeld hängt von der Maskengröße und dem Verhältnis der Brennweiten beider Linsen ab.

Da der Benutzer die Entfernungs-, Blenden- und Belichtungseinstellung der Kamera weiterhin durch Einblick in den kameraseitigen Sucher vornehmen muß, ergeben sich besondere konstruktive Anforderungen an den Aufstecksucher. Der Einblick in den Kamerasucher soll durch den Aufstecksucher nicht behindert werden. Der Weg beim Wechsel zum oder vom Einblick in den Aufstecksucher soll nicht zu groß sein. Für eine gute Detailerkennbarkeit soll die Suchervergrößerung möglichst groß sein. Das erfordert große Linsendurchmesser in der Frontlinse. Andererseits weisen Weitwinkelobjektive hoher Lichtstärke einen großen Durchmesser auf, wodurch das Gesichtsfeld des Aufstecksuchers behindert werden kann, wenn dieser möglichst nahe zum Kameragehäuse angeordnet wird.

Aufgrund dieser konstruktiv bedingten Vorgaben wurden bisher lediglich spezielle Aufstecksucher als Galilei-Sucher einfachster Bauart für bestimmte Brennweiten entwickelt. Für den Benutzer war dies tolerierbar, da die für den eingebauten Sucher gewählte Vergrößerung häufig noch die Darstellung eines Sucherrahmens für Objektive bis z.B. 28 mm Brennweite erlaubte und meist ohnehin nur ein weiteres Objektiv kürzerer Brennweite verwendet wurde. Wegen einer besseren Einstellgenauigkeit bei Standardobjektiven werden aber zunehmend höhere Suchervergrößerungen für den Kamerasucher gewünscht, so daß z.B. das Bildfeld für ein 28 mm Objektiv nicht mehr darstellbar ist. Außerdem wird durch moderne Rechen- und Fertigungsmethoden die Konstruktion von Weitwinkelobjektiven mit kürzeren Brennweiten und hoher Abbildungsleistung bei hoher Lichtstärke möglich, die immer mehr Anklang beim Benutzer finden. Für den Benutzer ergibt sich dann aber die Notwendigkeit, eine immer größer werdende Anzahl von Aufstecksuchem zu verwenden, wobei eine Verwechslung in der Zuordnung beim Austausch von Objektiven und Suchern nicht auszuschließen ist.

Der Erfindung lag daher die Aufgabe zugrunde, den von Kompakt-Kameras bekannten Vario-Sucher so weiterzubilden, daß er als Aufstecksucher mit kompakter Bauform und konstanter Baulänge kostengünstig herstellbar ist.

Diese Aufgabe wird bei einem Vario-Sucher der eingangs genannten Art erfindungsgemäß durch die kennzeichnenden Merkmale des Anspruchs 1 gelöst. Vorteilhafte Weiterbildungen ergeben sich aus den Merkmalen der Unteransprüche.

Der erfindungsgemäße Vario-Sucher zeichnet sich dadurch aus, daß die erste und dritte Linsengruppe im Fernrohrgehäuse feststehend angeordnet sind. Überraschenderweise braucht bei insgesamt guter Abbildungsleistung nur die zweite Linsengruppe zur Vergrößerungsänderung verschoben zu werden. Vorzugsweise werden dabei die Brennweiten der einzelnen Linsengruppen so gewählt, daß die Dioptrie des Gesamtsystems über den gesamten Einstellbereich in einem für ein normalsichtiges Auge leicht akkommodierbaren Bereich von -0,5 bis -1,0 liegt. Die alleinige Verschiebung der zweiten Linsengruppe erlaubt den Einsatz eines Variators mit einfacher Zylinderführung im Fernrohrgehäuse und konventioneller Stift-/Schlitz-Verstellung über einen äußeren Drehring. Die Zylinderführung des Variators kann durch lokale Gleitflächen auf seiner äußeren Mantelfläche an den Radius der inneren Zylinderfläche des Fernrohrgehäuses optimal angepaßt werden.

Da sich die zweite Linsengruppe bei ihrer Verstellung in der Nähe der dritten Linsengruppe bewegt, kann der Variator funktionell in einen Kopfbereich mit Aufnahme der Linsengruppe und einen hinteren Bereich zur Übertragung der Verstellung aufgeteilt werden. Für die Fertigung und Montage ist es dabei besonders vorteilhaft, den Führungsstift an eine federnde Zunge an dem Variator anzuformen. Diese kann beim Einsetzen des Variators in das Femrohrgehäuse nach innen gedrückt werden, wobei der Führungsstift dann unter der Federspannung nach geeigneter Ausrichtung selbsttätig in die Führungsbahnen springt. Die Ausbildung der federnden Zunge erfordert eine gewisse Länge, damit beim Zusammendrücken kein Materialbruch oder eine Materialverformung auftritt. Die mögliche Länge ist von dem zwischen den feststehenden Linsengruppen vorhandenen freien Raum und dem notwendigen Verschiebeweg abhängig. Sie wird aber auch durch den von der Höhe des angeformten Führungsstiftes abhängigen Federweg beeinflußt. Um die Höhe und damit den Federweg gering zu halten, muß die Wandstärke des Fernrohrgehäuses möglichst dünn gewählt werden, ohne die Stabilität des Zylinders zu beeinträchtigen. Eine dünne Wandstärke ist auch vorteilhaft für den Abstand der optischen Achse des Aufstecksuchers vom Kamerasucher. Sie ist aber nachteilig für das Anbringen einer sicheren Auflage einer Linse des ersten Linsengliedes. Überraschenderweise hat sich herausgestellt, daß durch die Einfügung eines flachen Sprengringes in eine Nut in der Wandung des Fernrohrgehäuses die notwendige Auflagefläche geschaffen werden kann, ohne den freien Raum für die Verschiebung des Variators entscheidend zu beeinträchtigen.

Durch das Einsetzen der in Lichtrichtung zweiten Linse der ersten Linsengruppe direkt in den Zylinder des Fernrohrgehäuses wird es möglich, die bildfeldbegrenzende Maske mit einer lagebestimmenden Nase zu versehen, die in eine am Fernrohrgehäuse angebrachte Ausnehmung eingreifen kann. Dadurch ist in einfacher Weise eine exakte Ausrichtung der Maske gewährleistet.

Eine zwischen Drehring und Adapter wirkende gefederte Kugelrastung erlaubt eine fühlbare und hörbare Einstellung von ausgewählten Suchervergrößerungen, die bestimmten Objektivbrennweiten zugeordnet sind.

Über eine am Fernrohrgehäuse in Lichtrichtung hinter der dritten Linsengruppe angebrachte Aufnahme können Vorsatzlinsen, z.B. zum Dioptrieausgleich, eingesetzt werden.

In der Zeichnung ist ein Ausführungsbeispiel des Vario-Suchers schematisch dargestellt und wird nachfolgend anhand der Figuren näher beschrieben. Dabei zeigen:
- Fig.1: einen Vario-Sucher in Seitenansicht und teilweise geschnitten,
- Fig.2: eine okularseitige Aufsicht auf den Vario-Sucher
- Fig.3: eine Schnittdarstellung der Kugelrastung
- Fig.4: das Fernrohrgehäuse in perspektivischer Ansicht und
- Fig.5: den Variator in perspektivischer Ansicht.

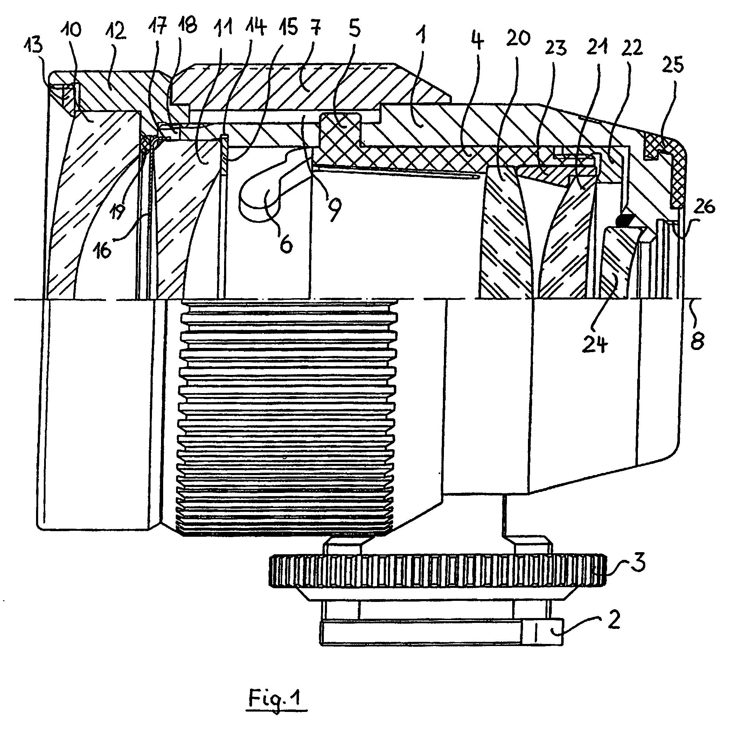

Der in Fig.1 dargestellte Vario-Sucher besteht aus einem Fernrohrgehäuse 1, das mit einem Adapter 2 versehen ist. Der Adapter 2 ist so geformt, daß er in einen üblichen Blitzschuh an einer Kamera eingesetzt und mit einem Rändelring 3 gesichert werden kann. In das Fernrohrgehäuse 1 ist ein Variator 4 mit einer Zylinderpassung verschiebbar eingesetzt. Der Variator 4 weist an seinem einen Ende einen angeformten Führungsstift 5 auf. Dieser greift durch eine Kurvenbahn 6 hindurch, die in das Fernrohrgehäuse 1 eingefräst ist.

Auf das Fernrohrgehäuse 1 ist ein Drehring 7 aufgeschoben, der eine parallel zur Längsachse 8 des Fernrohrgehäuses 1 verlaufende, innen liegende Längsnut 9 enthält. Der Führungsstift 5 greift auch in diese Längsnut 9 ein. Bei einer Drehung des Drehringes 7 wird der Führungsstift 5 in bekannter Weise durch diese Längsnut 9 mitgenommen und läuft im übrigen längs der Kurvenbahn 6 und längs der Längsnut 9. Daraus resultiert die Verschiebung des Variators 4 In Richtung der Längsachse 8.

Die erste Linsengruppe besteht aus zwei Linsen 10, 11 mit negativer Brechkraft. Dabei wird die Linse 10 in einem auf das Fernrohrgehäuse 1 geschraubten Fassungsring 12 durch einen Schraubring 13 gehalten. Der Fassungsring 12 sichert dabei auch den Drehring 7. Die Linse 11 ist in das Fernrohrgehäuse 1 eingesetzt. Wegen der geringen Wandstärke ist es nicht möglich, eine ausreichend sichere Auflage für die Linse 11 in das Fernrohrgehäuse 1 einzufräsen. Erfindungsgemäß ist daher an dieser Stelle zusätzlich eine Nut 14 eingestochen, in die ein Sprengring 15 eingelegt ist.

Zwischen die Linsen 10, 11 ist eine bildfeldbegrenzende Maske 16 eingefügt. Über eine an die Maske 16 angeformte Nase 17 und eine Ausnehmung 18 stimseitig im Fernrohrgehäuse 1 ist die Maske 16 hinsichtlich einer Rotation um die Längsachse 8 lageorientiert. Der Außendurchmesser der Maske 16 ist an den Innendurchmesser des Fassungsringes 12 angepaßt. Nach dem Aufschrauben des Fassungsringes 12 auf das Fernrohrgehäuse 1 wird die Maske 16 in den Fassungsring 12 eingelegt, wodurch die Maske 16 auch zur Längsachse 8 zentriert wird. Über einen elastischen Ring 19 wird die Maske 16 nach Einlegen und Festschrauben der Linse 10 ortsfest gehalten.

In den Variator 4 ist kopfseitig die ebenfalls aus zwei Linsen 20, 21 bestehende zweite Linsengruppe eingesetzt. Beide Linsen werden durch einen Vorschraubring 22 und einen Abstandsring 23 gehalten und zueinander positioniert.

Die dritte Linsengruppe besteht aus einer Einzellinse 24. Diese ist innenliegend in einer Aufnahme am Lichtaustrittsende des Fernrohrgehäuses 1 angeordnet. Auf der Einblickseite weist das Fernrohrgehäuse 1 eine Gummikappe 25 als Brillenschutz auf. Außerdem ist eine Aufnahme mit einem Schraubgewinde 26 vorgesehen, in das z.B. eine Vorsatzlinse zum Dioptrieausgleich eingesetzt werden kann.

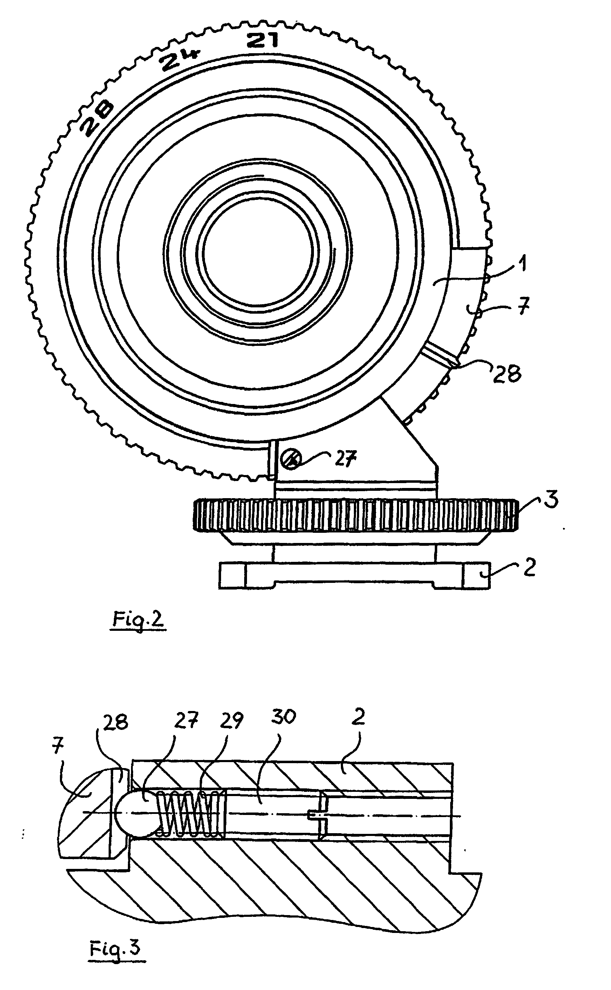

Fig.2 zeigt eine okularseitige Aufsicht. Das Fernrohrgehäuse 1 ist erkennbar gegenüber der Mittelachse des Adapters 2 versetzt angeordnet, um eine bessere Übereinstimmung mit der optischen Achse des Kamerabajonetts bzw. der Objektive zu erreichen. In den Adapter 2 ist eine federnde Kugelrastung 27 eingesetzt, die in stirnseitig am Drehring 7 angebrachte Rastkerben 28 eingreift. Die Rastkerben sind z.B. den Objektiv-Brennweiten 21, 24 und 28 mm zugeordnet.

Fig.3 zeigt eine Schnittdarstellung der Kugelrastung. Die Stärke der Rastung kann durch den Druck der Feder 29 über einen Gewindestift 30 eingestellt werden.

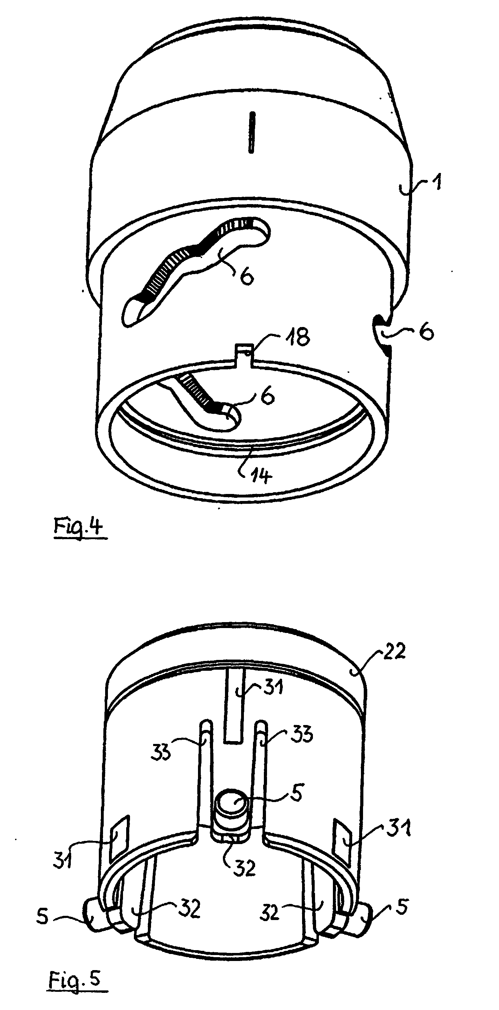

Fig.4 zeigt das Fernrohrgehäuse 1 in perspektivischer Ansicht. Zur Führung des Variators 4 sind drei symmetrisch zueinander liegende Kurvenbahnen 6 vorgesehen. An der hinteren Stirnseite des Fernrohrgehäuses 1 ist die Ausnehmung 18 zur Lageorientierung der Maske 16 angebracht. in der inneren Zylinderfläche ist die Nut 14 zur Aufnahme des Sprengringes 15 zu sehen. Das eine Ende der Kurvenbahnen 6 reicht nahe an diese Nut 14 heran, so daß der Verstellweg für den Variator 4 optimal ausgenutzt ist.

Fig.5 zeigt den Variator 4 in perspektivischer Ansicht mit aufgeschraubtem Vorschraubring 22. Auf der äußeren Zylinderfläche des Variators 4 sind mehrere zueinander versetzt angeordnete Gleitflächen 31 angeordnet. Den drei Kurvenbahnen 6 zugeordnet sind die Führungsstifte 5, die an drei Zungen 32 angeformt sind. Die Zungen 32 werden jeweils durch zwei schlitzförmige Einschnitte 33 in den Variator 4 in Richtung zu seiner Längsachse gebildet. Die Zunge 32 ist vorzugsweise trapezförmig ausgebildet, wobei der Führungsstift 5 an die kurze Trapezseite angeformt ist.

Zur Montage des Vario-Suchers wird der mit den Linsen 20, 21 bestückte Variator 4 in das mit der Linse 24 bestückte Fernrohrgehäuse 1 eingeschoben. Die Führungsstifte 5 werden dabei nach innen gedrückt und springen nach geeigneter Drehstellung des Variators 4 selbsttätig in die Kurvenbahnen 6. Danach wird der Drehring 7 auf das Fernrohrgehäuse 1 so aufgeschoben, daß die Längsnuten 9 über die Führungsstifte 5 laufen. Durch Aufschrauben des Fassungsringes 12 wird der Drehring 7 auf dem Fernrohrgehäuse 1 drehbar gehalten. Danach können der Sprengring 15, die Linse 11, die Maske 16, der elastische Ring 19 und die Linse 10 eingelegt und durch den Schraubring 13 fest auf ihre jeweiligen Auflagen gedrückt werden. Der Vario-Sucher besteht somit aus einem Minimum an Teilen, die in einfacher und übersichtlicher Weise montierbar sind, wobei sich die optisch wirksamen Teile selbsttätig zentrieren.

### Bezugszeichenliste

- 1: Fernrohrgehäuse
- 2: Adapter
- 3: Rändelring
- 4: Variator
- 5: Führungsstift
- 6: Kurvenbahn
- 7: Drehring
- 8: Längsachse
- 9: Längsnut
- 10: erste Linse der ersten Linsengruppe
- 11: zweite Linse der ersten Linsengruppe
- 12: Fassungsring
- 13: Schaubring
- 14: Nut
- 15: Sprengring
- 16: Maske
- 17: Nase
- 18: Ausnehmung
- 19: elastischer Ring
- 20: erste Linse der zweiten Linsengruppe
- 21: zweite Linse der zweiten Linsengruppe
- 22: Vorschraubring
- 23: Abstandsring
- 24: Einzellinse als dritte Linsengruppe
- 25: Gummikappe
- 26: Schraubgewinde
- 27: Kugelrastung
- 28: Rastkerbe
- 29: Feder
- 30: Gewindestift
- 31: Gleitfläche
- 32: Zunge
- 33: schlitzförmiger Einschnitt

## Patentansprüche

1. Vario-Sucher für Weitwinkelaufnahmen mit fotografischen Kameras bestehend aus drei Linsengruppen (10, 11; 20, 21; 24), von denen die in Lichtrichtung erste Linsengruppe (10,11)negative, die zweite (20,21) positive und die dritte (24) negative Brechkraft aufweisen und bei dem die Linsengruppen zur Änderung der Suchervergrößerung relativ zueinander verschiebbar angeordnet sind, **dadurch gekennzeichnet, daß** die drei Linsengruppen in einem Fernrohrgehäuse (1) angeordnet sind, das mit einem Adapter (2) zum Einsetzen in einen Blitzschuh an der Kamera versehen ist, wobei die erste (10, 11) und dritte (24) Linsengruppe in dem Femrohrgehäuse (1) feststehend sind und die zweite (20, 21) Linsengruppe in einem in dem Fernrohrgehäuse (1) verschiebbaren Variator (4) angeordnet ist, wobei der Variator (4) mit mindestens einem Führungsstift (5) versehen ist, der durch eine im Fernrohrgehäuse (1) angeordnete Kurvenbahn (6) hindurch in eine parallel zur Längsachse (8) des Fernrohrgehäuses (1) verlaufende Längsnut (9) eingreift, die in einem auf das Fernrohrgehäuse (1) aufgeschobenen Drehring (7) vorgesehen ist, wobei der Vorio- Sucher das Fernrohrgehäuse (1), den Adaptor(2), den Variator (4) und den Drehring (7) enthält.

2. Vario-Sucher nach Anspruch 1, **dadurch gekennzeichnet, daß** die erste Linsengruppe aus zwei Linsen (10, 11) besteht, und zwischen den beiden Linsen (10, 11) der ersten Linsengruppe eine bildfeldbegrenzende Maske (16) ortsfest eingesetzt ist.

3. Vario-Sucher nach Anspruch 2, **dadurch gekennzeichnet, daß** die Maske (16) mit einer lagebestimmenden Nase (17) versehen ist, die in eine entsprechende Ausnehmung (18) im Fernrohrgehäuse (1) eingreift.

4. Vario-Sucher nach Anspruch 1, **dadurch gekennzeichnet, daß** das Fernrohrgehäuse (1) als in Lichtrichtung offener Kreiszylinder ausgebildet ist, der lichtaustrittsseitig mit einer Aufnahme für die dritte Linsengruppe (24) versehen ist.

5. Vario-Sucher nach Anspruch 4, **dadurch gekennzeichnet, daß** der Variator (4) als Einsatz für das Fernrohrgehäuse (1) kreiszylindrisch aus federelastischem Material gefertigt ist, wobei kopfseitig eine Aufnahme für die zweite Linsengruppe (20,21) vorgesehen ist und der hintere Teil mindestens eine durch zwei schlitzförmige Einschnitte (33) in Richtung der Längsachse des Variators (4) gebildete federnde Zunge (32) aufweist, an die ein radial nach außen weisender Führungsstift (5) angeformt ist.

6. Vario-Sucher nach Anspruch 5, **dadurch gekennzeichnet, daß** auf der äußeren Zylinderfläche des Variators (4) lokal hervorstehende Gleitflächen (31) angeordnet sind, die an den Radius der inneren Zylinderfläche des Fernrohrgehäuses (1) angepaßt sind.

7. Vario-Sucher nach Anspruch 5 oder 6, **dadurch gekennzeichnet, daß** der Variator (4) als Kunststoffspritzteil ausgeführt ist.

8. Vario-Sucher nach Anspruch 2 und 4, **dadurch gekennzelchnet,** daß die in Lichtrichtung zweite Linse (11) der ersten Linsengruppe auf einem in eine Nut (14) im Fernrohrgehäuse (1) eingesetzten Sprengring (15) aufliegt.

9. Vario-Sucher nach Anspruch 1, **dadurch gekennzeichnet, daß** der Drehring (7) mit Rastkerben (28) für vorbestimmte Suchervergrößerungen versehen ist, in die eine In den Adapter (2) eingesetzte federnde Kugelrastung (27,29,30) eingreift.

10. Vario-Sucher nach Anspruch 4, **dadurch gekennzeichnet, daß** das Fernrohrgehäuse (1) in Lichtrichtung hinter der dritten Linsengruppe (24) eine Aufnahme (26) für eine Vorsatzlinse aufweist.

11. Vario-Sucher nach Anspruch 1, **dadurch gekennzeichnet, daß** die Brennweiten der drei Linsengruppen (10, 11; 20, 21; 24) so gewählt sind, daß die Dioptrie des Gesamtsystems über den gesamten Einstellbereich in einem für ein normalsichtiges Auge leicht akkommodierbaren Bereich liegt.

12. Vario-Sucher nach Anspruch 11, **dadurch gekennzeichnet, daß** die Dioptrie des Gesamtsystems über den gesamten Einstellbereich zwischen -0,5 und -1,0 liegt.

## Claims

1. Zoom viewfinder for wide-angle photography with photographic cameras, consisting of three lens groups (10, 11; 20, 21; 24), of which the first lens group (10, 11) in light direction has negative focal power, the second lens group (20, 21) positive focal power and the third lens group (24) negative focal power and in which the lens groups are arranged to be displaceable relative to one another for change in the viewfinder magnification, **characterised in that** the three lens groups are arranged in a telescope housing (1) which is provided with an adapter (2) for insertion in a flash shoe at the camera, wherein the first lens group (10, 11) and third lens group (24) are stationary in the telescope housing (1) and the second lens group (20, 21) is arranged in a variator (4) displaceable in the telescope housing (1), wherein the variator (4) is provided with at least one guide pin (5) which engages through a curved track (6), which is arranged in the telescope housing (1), into a longitudinal groove (9) which extends parallel to the longitudinal axis (8) of the telescope housing (1) and which is provided in a rotary ring (7) pushed onto the telescope housing (1), wherein the zoom viewfinder comprises the telescope housing (1), the adapter (2), the variator (4) and the rotary ring (7).

2. Zoom viewfinder according to claim 1, **characterised in that** the first lens group consists of two lenses (10, 11), and a mask (16), which limits the image field, is inserted in stationary position between the two lens (10, 11) of the first lens group.

3. Zoom viewfinder according to claim 2, **characterised in that** the mask (16) is provided with a position-determining lug (17) which engages in a corresponding recess (18) in the telescope housing (1).

4. Zoom viewfinder according to claim 1, **characterised in that** the telescope housing (1) is constructed as a circular cylinder which is open in light direction and which is provided at the light exit side with a mount for the third lens group (24).

5. Zoom viewfinder according to claim 4, **characterised in that** the variator (4) as insert for the telescope housing (1) is produced from resiliently elastic material in circularly cylindrical form, wherein a mount for the second lens group (20, 21) is provided at the head end and the rear part has at least one resilient tongue (32) which is formed by two slot-shaped incisions (33) in the direction of the longitudinal axis of the variator (4) and at which a radially outwardly pointing guide pin (5) is formed.

6. Zoom viewfinder according to claim 5, **characterised in that** locally protruding slide surfaces (31), which are matched to the radius of the inner cylinder surface of the telescope housing (1), are arranged on the outer cylinder surface of the variator (4).

7. Zoom viewfinder according to claim 5 or 6, **characterised in that** the variator (4) is constructed as a plastics material injection-moulded part.

8. Zoom viewfinder according to claim 2 and 4, **characterised in that** the lens (11), which is second in light direction, of the first lens group rests on a spring ring (15) inserted in a groove (14) in the telescope housing (1).

9. Zoom viewfinder according to claim 1, **characterised in that** the rotary ring (7) is provided with detent notches (28) for predetermined viewfinder magnifications, in which a ball detent (27, 29, 30) resiliently inserted in the adapter (2) engages.

10. Zoom viewfinder according to claim 4, **characterised in that** the telescope housing (1) has a mount (26) for a front lens behind the third lens group (24) in light direction.

11. Zoom viewfinder according to claim 1, **characterised in that** the focal depths of the three lens groups (10, 11; 20, 21; 24) are so selected that the dioptry of the entire system over the entire setting range lies in a range able to be readily accommodated by an eye of normal vision capability.

12. Zoom viewfinder according to claim 11, **characterised in that** the dioptry of the entire system over the entire setting range lies between -0.5 and -1.0.

## Revendications

1. Viseur zoom pour des, photos à grand angle avec des caméras photographiques, constitué de trois groupes de lentilles (10, 11 ; 20, 21 ; 24) dont le premier groupe de lentilles (10, 11) dans la direction de lumière a un pouvoir réfringent négatif, le deuxième (20, 21) un pouvoir réfringent positif et le troisième (24) un pouvoir réfringent négatif et où les groupes de lentilles, pour modifier l'agrandissement du viseur, sont disposés d'une manière déplaçable les uns relativement aux autres, **caractérisé en ce que** les trois groupes de lentilles sont disposés dans, un boîtier de télescope (1) qui est pourvu d'un adaptateur (2) pour l'insertion dans un coussinet d'éclair à la caméra, où les premiers (10, 11) et troisième (24) groupes de lentilles sont fixes dans le boîtier de télescope (1) et le deuxième groupe de lentilles (20, 21) est disposé dans un variateur (4) déplaçable dans le boîtier de télescope (1), où le variateur (4) est pourvu d'au moins un axe de guidage (5) qui s'engage à travers une voie courbée (6) disposée dans le boîtier de télescope (1) dans une. rainure longitudinale (9) s'étendant parallèlement à l'axe longitudinal (8) du boîtier de télescope (1), qui est prévue dans un bague tournante (7) poussée sur le boîtier de télescope (1), où le viseur zoom contient le boîtier de télescope (1), l'adaptateur (2), le variateur (4) et la bague tournante (7).

2. Viseur zoom selon la revendication 1, **caractérisé en ce que** le premier groupe de lentilles est constitué de deux lentilles (10, 11), et **en ce qu'**il est placé d'une manière fixe entre les deux lentilles (10,11) du premier groupe de lentilles un masque (16) délimitant le champ de vision.

3. Viseur zoom selon la revendication 2, **caractérisé en ce que** le masque (16) est pourvu d'un ergot (17) déterminant la position qui s'engage dans un évidement correspondant (18) dans le boîtier de télescope (1).

4. Viseur zoom selon la revendication 1, **caractérisé en ce que** le boîtier de télescope (1) est réalisé comme cylindre circulaire ouvert dans la direction de la lumière qui est pourvu au côté de la sortie de la lumière d'un logement pour le troisième groupe de lentilles (24).

5. Viseur zoom selon la revendication 4, **caractérisé en ce que** le variateur (4) est fabriqué comme insert pour le boîtier de télescope (1) en cylindre circulaire en un matériau ayant une élasticité de ressort, où est prévu, côté tête, un logement pour le deuxième groupe de lentilles (20, 21), et la partie arrière présente au moins une languette élastique (32) formée par deux entailles en forme de fente (33) dans la direction de l'axe longitudinal du variateur (4) à laquelle est rapporté par formage un axe de guidage (5) dirigé radialement vers l'extérieur.

6. Viseur zoom selon la revendication 5, **caractérisé en ce que** sont disposées sur la face cylindrique extérieure du variateur (4) des surfaces de glissement (31) faisant saillie localement qui sont adaptées au rayon de la face cylindrique interne du boîtier de télescope (1).

7. Viseur zoom selon la revendication 5 ou 6, **caractérisé en ce que** le variateur (4) est réalisé comme pièce moulée par injection de matériau synthétique.

8. Viseur zoom selon la revendication 2 et 4, **caractérisé en ce que** la deuxième lentille (11) dans la direction de la lumière du premier groupe de lentilles repose sur un jonc (15) placé dans une rainure (14) dans le boîtier de télescope (1).

9. Viseur zoom selon la revendication 1, **caractérisé en ce que** la bague tournante (7) est pourvue d'encoches d'arrêt (28) pour des agrandissements de viseur prédéterminés dans lesquelles s'engage un organe d'enclenchement à bille élastique (27, 29, 30) placé dans l'adaptateur (2).

10. Viseur zoom selon la revendication 4, **caractérisé en ce que** le boîtier de télescope (1) présente dans la direction de la lumière derrière le troisième groupe de lentilles (24) un logement (26) pour une lentille additionnelle.

11. Viseur zoom selon la revendication 1, **caractérisé en ce que** les distances focales des trois groupes de lentilles (10, 11 ; 20, 21 ; 24) sont sélectionnées de façon que la dioptrie du système total sur toute la zone de réglage se situe dans une zone facilement accommodable pour un oeil d'une vision normale.

12. Viseur zoom selon la revendication 11, **caractérisé en ce que** la dioptrie du système total sur la zone de réglage totale se situe entre -0,5 et -1,0.
